# EUROPEAN PATENT APPLICATION

(11) **EP 1 911 990 A2**
(43) Date of publication of application: **16.04.2008**
(21) Application number: 07118413.9
(22) Date of filing: 12.10.2007
(51) Int. Cl.: F16D 69/02, C04B 35/83

(54) **Carbon-carbon friction material with improved wear life**

(30) Priority: 13.10.2006 US 546912
(71) Applicant: Honeywell International, Inc., Morristown, NJ 07962 (US)
(72) Inventor: James, Mark C., South Bend IN 44637 (US); Murdie, Neil, Granger IN 46530 (US); Wood, Michael D., Brownsburg IN 46112 (US)
(74) Representative: Buckley, Guy Julian

(57) **Abstract**

Carbon-carbon composite material article and method of manufacturing it. The carbon-carbon composite material comprises a carbonized woven or nonwoven fabric-based preform which is subjected to rapid densification, e.g. using a resin transfer molding process, and which may subsequently be infiltrated with a ceramic additive solution in order to improve wear and friction properties. The method comprises densifying the preform and subsequently adding a ceramic additive to it to infiltrate the material with the additive and enhance the properties of the final product.

## Description

### FIELD OF THE INVENTION

This invention relates generally to carbon-carbon composite materials and methods of production thereof. More specifically, the present invention relates to a method for improving the wear performance of carbon-carbon composite materials by densifying a carbon preform and subsequently infiltrating it with a ceramic additive.

### BACKGROUND OF THE INVENTION

Carbon-carbon composites are essential materials in a variety of high-technology applications requiring durability at very high temperatures. For decades, these composites have been used in the disk brakes of jet fighters and large passenger airliners due to their excellent friction performance, low weight, and resistance to thermal shock. Additional applications include disk brakes of land transportation means such as tanks, special vehicles, rapid transit trains and racing cars, high-temperature structures such as gas jet-engine parts, rocket nozzles of launch vehicles, re-entry surfaces of space shuttles, walls of fusion reactors and other high-temperature industrial equipment.

Carbon-carbon-carbon composites generally comprise a carbon fiber substrate (fiber component) embedded in a carbon matrix (filler component). Although both consist of carbon, the behavior of the material essentially depends on the state of the carbon of the respective component. Crystalline carbon, i.e. graphite, consists of closely joined hexagonal crystals which are arranged inn layers and which are held together primarily by Van der Waals forces. In addition to its defined forms, graphite and diamond, carbon can assume a large number of intermediate states in a quasi-crystalline form, from an amorphous, vitreous carbon to a highly crystalline graphite.

Threads, bands and fabrics are typically used as the fiber component. The highest strength is achieved by a straight orientation of the fibers. For most technical applications, two-dimensional (2-D) fabrics are used. If high strength is required in all three directions it is possible to use fabrics that are woven in three directions of space, i.e. 3-D fabrics.

The method of manufacturing carbon-carbon composites can be basically divided into a process of producing a preform using a carbon-based fiber or fabric, and a process of densifying the preform to meet application criteria. The method also typically includes an oxidation-resistance treatment to impart durability on the finished product.

A continuous need exists to improve the friction and wear performance of aircraft brake friction materials manufactured with carbon-carbon composites without a substantial increase in manufacturing costs which reduce industrial applicability.

### SUMMARY OF THE INVENTION

In view of the above, it is one of the objects of the present invention to provide an improved method for manufacturing a carbon-carbon composite material which provides lower wear rates (longer life) without significantly increasing manufacturing costs. The method of the present invention comprises a step of carbonizing a nonwoven carbon preform and subjecting it to densification. Densification may be achieved by chemical vapor deposition/chemical vapor infiltration (referred to for convenience herein by the acronym "CVD") and/or liquid resin/pitch impregnation procedures. A key feature of the inventive method is a specific sequence of processing steps, including densification of the nonwoven material followed by infiltration of the material with a liquid resin/pitch carbon followed by infiltration of a ceramic additive. After drying and heat-treating, the nonwoven material is subjected to a second cycle of carbon densification with either CVD or liquid resin prior to further processing. The sequence of densification with CVD and/or liquid resin/pitch carbons and infiltration of the additive results in the optimum pore-size distribution that controls and improves distribution and final particle size in the additive, which in turn results in lower wear rates while maintaining good friction properties.

It is another object of the present invention to provide an improved carbon-carbon composite material article which exhibits the strength and thermal requirements necessary in aircraft brake applications, while at the same time providing lower wear rates and good friction properties. The inventive material comprises a carbonized nonwoven preform which is subjected to densification using either liquid resin infiltration or chemical vapor deposition/infiltration of carbon and is subsequently infiltrated with a solution comprising a ceramic additive. The specific sequence of carbon densification followed by infiltration with liquid resin carbon provides the desired pore-size distribution that will enable infiltration of a ceramic additive and prevent the agglomeration of the additive and the formation of large particles and will result in lower wear rates with good friction properties.

One embodiment of the present invention is a method for manufacturing a carbon-carbon composite material article. This method comprising sequentially: providing a nonwoven material (e.g., a preform); carbonizing the nonwoven material; subjecting the nonwoven material to chemical vapor deposition/infiltration (CVD) and/or liquid resin/pitch densification, e.g. to a density of at least 1.5 gm/cc; carbonizing the nonwoven material; infiltrating the nonwoven material with a ceramic additive in suspension; drying the nonwoven material; and subjecting the nonwoven material to another CVD or liquid resin/pitch densification procedure - e.g. to RTM processing using high viscosity pitch resin - and to a heat treatment, before or after this second densification procedure, to set the ceramic additive. In said RTM processing, the pitch may be stabilized and then carbonized or charred. The step of adding a ceramic additive may include infiltrating the nonwoven material with a ceramic additive solution, such as a solution of silica suspended in water. This invention also contemplates carbon-carbon composite articles manufactured by the above-described method.

A specific embodiment of the above method includes subjecting a carbonized nonwoven preform sequentially to CVD processing, then to rapid densification using a resin transfer molding (RTM) process with a high viscosity pitch resin, then to infiltration with a solution of silica suspended in water, then to CVD processing.

In another embodiment, this invention provides a method for manufacturing a carbon-carbon composite preform. This method involves the sequential steps of: providing a nonwoven preform; carbonizing the preform; subjecting the preform to a first chemical vapor deposition procedure; subjecting the preform to a resin transfer molding process with a high viscosity resin/pitch; stabilizing the resin/pitch; carbonizing or charring the resin/pitch; infiltrating the preform with a solution of silica suspended in water; drying the preform; subjecting the preform to a second chemical vapor deposition procedure; and heat treating the preform.

Carbon-carbon composite preforms manufactured by the above process are also provided by the present invention. In such preforms, it is preferable that the weight-% of silicon carbide in the preform is less than 2%, and that all silicon carbide particles have an average diameter of less than 1 micron. An example of such a preform is a carbonized nonwoven preform, wherein the preform has been subjected to a first chemical vapor deposition procedure prior to the step of densification, to rapid densification using a high viscosity pitch resin in a resin transfer molding process, to subsequent infiltration with silica suspended in water, and to a second chemical vapor deposition procedure subsequent to infiltration with the silica suspended in water.

### BRIEF DESCRIPTION OF THE DRAWINGS

The present invention will become more fully understood from the detailed description given herein and from the accompanying drawings. The drawings are not to scale, and are given by way of illustration only. Accordingly, the drawings should not be construed as limiting of the present invention.

Figure 1 is a flowchart illustration of general manufacturing process steps that can be applied to manufacture a carbon-carbon composite material in accordance with the present invention.

Figure 2 is a flowchart illustration of a preferred embodiment of the method for manufacturing a carbon-carbon composite material in accordance with the present invention.

### DETAILED DESCRIPTION OF THE INVENTION

The present invention is directed to an improved carbon-carbon composite material. The present invention is also directed to an improved method for manufacturing a carbon-carbon composite material wherein at least one of the densification steps with carbon involves rapid infiltration with a liquid resin/pitch carbon followed by infiltration with a ceramic additive which results in lower wear rates with good friction properties.

A composite is a material created from a fiber (or reinforcement) and an appropriate matrix material in order to maximize specific performance properties. The individual constituents do not dissolve or merge completely but retain their identities as they act in concert. In composites, the matrix material acts to hold the fibers together and protect them, and to transfer the load to the fibers in the fabricated composite part. The reinforcing fiber imparts strength and other required properties to the composite. Among composites, carbon-carbon composites are used in a variety of applications and consist of a composite of carbon fiber in a carbon matrix.

Carbon fibers are reinforcing fibers known for their lightweight, high strength, and high stiffness properties. They are generally produced by pyrolysis of an organic precursor fiber in an inert atmosphere at high temperatures. These fibers may be produced from several different types of precursor fibers, such as polyacrylonitrile (PAN), rayon, and petroleum pitch. The carbon fibers are produced by the controlled burning off of the oxygen, nitrogen, and other non-carbon parts of the precursor fiber, leaving only carbon in the fiber. During the burning off (carbonization/graphitization) steps, the fibers are run through a furnace to produce carbon or graphite fibers. The carbon or graphite fibers are produced at furnace temperatures of 1000-3000°C.

A carbon preform is a fibrous reinforcement pre-shaped to the approximate contour and thickness desired in the finished part. Processing carbon-carbon composite preforms consists of building up of the carbon matrix around the carbon fibers. There are two common ways to create the matrix: through chemical vapor deposition/infiltration and through impregnation with a resin/pitch. Chemical vapor deposition/infiltration begins with a preform in the desired shape of the part, usually formed from multiple layers of woven carbon fabric. The preform is heated in a furnace pressurized with an organic gas, such as methane, acetylene, or benzene. Under high heat and relatively low pressure, the gas decomposes and deposits a layer of carbon onto the carbon fibers. The gas must diffuse through the entire preform to make a uniform matrix, so the process is very slow, often requiring several weeks and several processing cycles to make a single part.

In the second method, a liquid resin such as phenolic or pitch is infiltrated into the preform to fill the open porosity, The preform is then pyrolized at high temperature to rigidize the composite and remove volatiles. Alternatively, a preform can be built up from woven or nonwoven resin-impregnated carbon textiles or yarns, then cured and pyrolized.

In both methods of resin infiltrated preforms the resin shrinks during subsequent carbonization which results in a network of fine cracks and pores in the matrix carbon and a reduction in density. The part must then be re-infiltrated with resin or CVD to fill in the small cracks and to achieve the desired density.

The carbon-carbon composite material of the present invention comprises a nonwoven preform that is carbonized and subjected to a combination of CVD and liquid resin infiltration prior to the addition of a ceramic additive.

Previous efforts to improve the wear rates of carbon composites with the introduction of additives have utilized short chopped fibers and resin matrices. The problem with these materials is that they have lower strength compared with carbon-carbon composites made from nonwoven preforms that contain continuous fibers. In addition, the z-oriented fibers generated during needling in the nonwoven preforms provide good interlaminar strength properties as well as good axial thermal conductivity properties that are required in friction applications where carbon-carbon composites are used.

Previous efforts to produce a low wearing carbon-carbon composites using nonwoven preforms have utilized melt infiltration of silicon (Si). The problem with these materials is that they generate large particles of ceramic (SiC) that lead to high wear rates due to the abrasive nature of the large SiC particles.

In the present invention the use of a nonwoven preform is combined with the infiltration of silica (SiO₂) particles to generate a low wearing material. In the present invention the use of liquid infiltration of resin/pitch is used to provide a fine network or pores into which the fine particle of silica are infiltrated. Because of the small size of the porosity the size of the final SiC particles that are generated during the Conversion Heat-Treatment process remain small, generally less than 5 microns. It is the fine size of the SiC particles that leads to low wear rates of the carbon-carbon composites of the present invention.

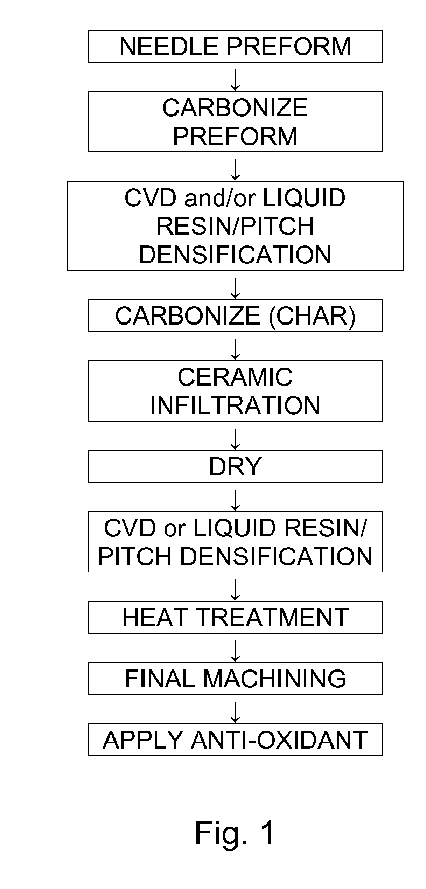

Figure 1 shows various combinations of densification and infiltration methods that can be used to form a low wearing C-C composite in the present invention. In all cases a nonwoven or woven preform is utilized to provide the high strength and good axial thermal conductivity required for most friction applications. The nonwoven fiber preforms are densified using either chemical vapor deposition/infiltration (CVD) or liquid resin infiltration (resin or pitch) to fill the majority of pores with carbon. In both cases the preforms require a second cycle of densification with resin or pitch to fill the larger pores and develop a network of fine cracks into which the colloidal ceramic (silica) can be infiltrated. If resin or pitch is used in the first densification cycle an intermediate carbonization/graphitization step is required following the first densification cycle help generate a network of pores into which the second cycle of resin/pitch can be impregnated.

The goal of the first two cycles of densification is to generate a network of fine cracks into which the colloidal silicon is introduced via liquid infiltration. The type of densification medium used in the first and second densification cycle and the use of an optional carbonization/heat treatment step depends on the original pore-size distribution of the preform as well as the pore size following the first cycle densification. If CVD is used first, then the second cycle has to be a liquid densification process with pitch or resin. The liquid infiltration fills the large pores. The existence of large pores is undesirable since they allow high levels of particles to agglomerate during subsequent heat treat conversion to form large particles of SiC (> 10 microns) which cause high wear rates due to their abrasive nature. For low wear rates the ceramic particles (SiC) have to be smaller than 5 microns and preferably 1 microns or less.

Following the liquid infiltration of resin or pitch the materials are carbonized or heat treated to form the network of cracks prior to infiltration with Ludox (colloidal silica). Following the infiltration of the colloidal silica the materials are dried to remove the liquid medium used to infiltrate the colloidal silica into the composite. The composite is then densified with either CVD or resin/pitch to help bind the silica particles into the carbon prior to a heat-treatment conversion step where the silica particles are converted to fine particles of silicon carbide.

In one embodiment of the present invention, a carbonized nonwoven material is subjected to a first chemical vapor deposition procedure, followed by infiltration of pitch and then the addition of a ceramic additive by infiltration of a colloidal suspension containing silica. After the nonwoven material is dried and heat-treated, it is subjected to a second cycle of chemical vapor deposition to bind the SiO₂ / SiC into the composite material.

In another embodiment of the present invention, the nonwoven material is a nonwoven preform which is densified by subjecting it to rapid impregnation by means of a resin transfer molding (RTM) process, preferably utilizing a high viscosity pitch resin.

In a preferred embodiment of the present invention, the step of densifying the nonwoven material is followed by a step of stabilizing the pitch and a further step of carbonizing the pitch, and the step of adding a ceramic additive comprises infiltrating the nonwoven material with a ceramic additive solution, preferably one comprising silica.

In another preferred embodiment of the present invention, the nonwoven material is infiltrated with a ceramic additive solution comprising a solution of Silica suspended in water.

In a most preferred embodiment of the present invention, a carbonized nonwoven preform is subjected to rapid densification using RTM with a high viscosity pitch resin and is subsequently infiltrated with a solution of Silica suspended in water. The nonwoven preform is preferably subjected to two separate chemical vapor deposition procedures. The first chemical vapor deposition procedure takes place prior to the step of RTM densification with a pitch, while the second CVD step occurs subsequent to the step of infiltration with a silica solution.

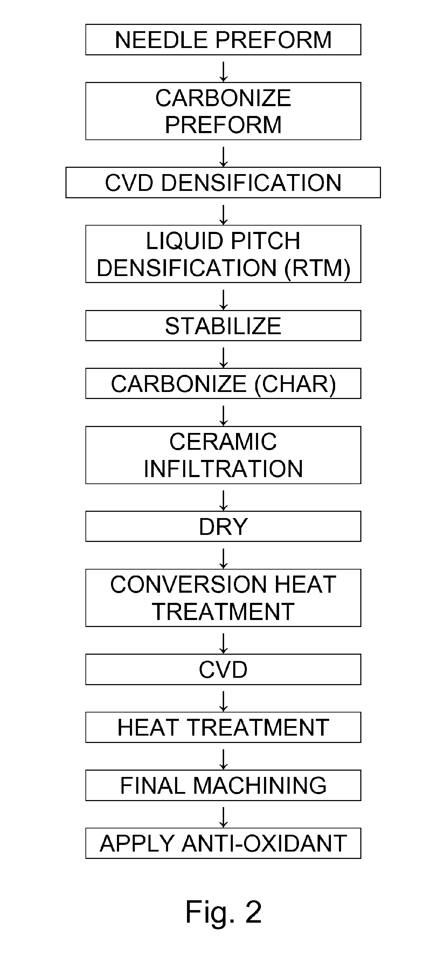

Figure 2 shows one embodiment of the inventive method for manufacturing a carbon-carbon composite material of the present invention. To produce the carbon-carbon composite material that may be used, for example, for an aircraft brake disc, a plurality of carbon fiber substrates are available. These carbon fiber substrates typically comprise carbon fibers embedded in a carbon matrix. The substrates may be stacked on top of each other to a desired thickness and then the stacked substrates may be needle-punched together, as is known in the art, to join or consolidate the substrates to each other by intermingling carbon fibers between the layers of substrates. This consolidation of the substrates creates a preform.

In one embodiment of a present invention, the preform is formed by needling nonwoven materials. After the nonwoven preforms are created, they are carbonized and subjected to a first chemical vapor deposition process followed by a step of densification.

In one embodiment of the present invention, the densification step comprises subjecting the nonwoven material to a rapid transfer molding (RTM) process utilizing pitch. In a preferred embodiment of the present invention, the RTM process utilizes a high viscosity pitch resin.

In a preferred embodiment of the present invention, the densification step further comprises a step of stabilizing the pitch and a step of carbonizing or charring the pitch.

In a most preferred embodiment of the present invention, a ceramic additive is added to the material in order to enhance performance characteristics such as wear, and friction stability. The ceramic additive may comprise silica or a solution of silica suspended in water and may be infiltrated into the nonwoven material. After addition of the ceramic additive, the nonwoven material is preferably dried in a low temperature oven and heat treated in order to convert the silica to silicon carbide.

After heat-treatment, the nonwoven material is subjected to a second chemical vapor deposition procedure. After the second CVD step, the manufacturing process proceeds as is known in the art by, for example, machining the preform in order to meet application criteria. Normally, carbon-carbon composites produced in accordance with this invention will be coated with anti-oxidant before use.

The liquid resin/pitch impregnation process of the present invention fills the large pores in the nonwoven substrate. After stabilization and carbonization, approximately 15% of the pitch mass is lost, and the structure is opened up with fine connected porosity more similar to the random fiber materials. Infiltrating with a ceramic additive at this point provides a more uniform distribution of silica and prevents agglomeration. Heat treatment further shrinks the pitch matrix and opens up the porosity for improved densification during the final CVD step. Furthermore, final heat treatment converts the silica into fine silicon carbide particles. This, in turn, results in a very efficient final CVD cycle and leads to higher densities than all-CVD densified nonwoven materials.

This invention contemplates a specific order of processing (CVD and liquid densification) that results in the desired chemistry of the final C-C composite as well as the desired distribution and particle size of a ceramic filler that results in a low wearing C-C composite for friction applications. The general process may be described with reference to Figure 1. The basic process may include the following steps.
(1) Manufacture of nonwoven preforms. The preforms are manufactured from carbon fiber using either pitch or PAN precursors. The preforms consist of continuous fibers arranged in the X and Y plane as well as short chopped fibers in the Z-direction.
(2) The nonwoven preforms are then densified with pitch or CVD matrices using a variety of infiltration methods including VPI and CVD. In the case of pitch infiltration the composite may be carbonized to 600-2000°C to remove the volatiles prior to a second cycle of densification with pitch or CVD. The density of the composite is between 0.8 - 1.4 g/cc.
(3) A second densification cycle is then applied with liquid pitch or resin matrix carbon using a variety of infiltration methods including VPI and RTM. It is the pitch and resin matrix densification that provides the desired pore-size distribution required prior to the ceramic additive infiltration which subsequently provides the small particle size of SiC required to produce a low wearing composite material.
(4) The preform is then heated in air at low temperatures (100-300°C) to stabilize the pitch matrix prior to carbonization.
(5) The composite is then carbonized to 600-1000°C to remove the volatiles. The density of the composite is between 1.3-1.7 g/cc.
(6) Following carbonization the composite is infiltrated with the ceramic additive. The infiltration may take the form of vacuum infiltration with the additive suspended in a liquid slurry.
(7) Following infiltration of the ceramic additive there is an optional heat treatment step to convert the ceramic additive (e.g. silica) to a carbide such as SiC. The heat treatment is required at this stage if there is no final heat-treatment step (step 9) following the final CVD/pitch densification step (step 8).
(8) Following the infiltration of the ceramic additive the composite undergoes a final densification cycle using either pitch or CVD carbon.
(9) The composite is then heat-treated to at least 1800°C to convert the ceramic additive (e.g., silica) to carbide (e.g., SiC).
(10) The composite is then machined to its final dimensions.
(11) An oxidation protection system is then applied to the composite.

### EXAMPLES

Examples of the various embodiments of the low wear carbon-carbon composites provided by this invention are described below.

### Example 1

A nonwoven preform is made from carbon fiber using PAN precursors. The preform consists of continuous fibers arranged in the X and Y plane as well as short chopped fibers in the Z-direction. The nonwoven preform is then densified with carbon using CVD. The density of the composite is 1.1 g/cc. A second densification cycle is then applied with pitch using vacuum impregnation. The density of the composite is 1.6 g/cc. The preform is stabilized in air at 170°C for 30 days. The composite is then carbonized at 600-1000°C to remove the volatiles. The density of the composite is 1.5 g/cc). Following carbonization the composite is infiltrated with silica using vacuum infiltration of silica suspended in an aqueous slurry. Following the infiltration by the ceramic additive, the composite undergoes a third and final densification cycle of carbon with pitch by VPI. This is then followed by heat treatment to >1800°C to convert the ceramic additive to SiC. The composite is then machined to the configuration of an aircraft brake disc. Finally, an oxidation protection system is applied to the composite brake disc.

### Example 2

A nonwoven preform is made from carbon fiber using pitch precursors. The preform consists of continuous fibers arranged in the X and Y plane as well as short chopped fibers in the Z-direction. The nonwoven preform is then densified with carbon using CVD. The density of the composite is 0.9 g/cc. A second densification cycle is then applied with a resin matrix carbon vacuum pressure impregnation. The preform is stabilized in air at 170°C for 20 days. The composite is then carbonized at 1000°C to remove the volatiles. The density of the composite is 1.3 g/cc). Following carbonization the composite is infiltrated with silica using vacuum infiltration of silica suspended in an aqueous slurry. Following the infiltration by the ceramic additive, the composite undergoes a third and final densification cycle of carbon with by CVD. This is then followed by heat treatment to >1800°C to convert the ceramic additive to SiC. The composite is then machined to the configuration of an aircraft brake disc. Finally, an oxidation protection system is applied to the composite brake disc.

### Example 3

A nonwoven preform is made from carbon fiber using PAN precursors. The preform consists of continuous fibers arranged in the X and Y plane as well as short chopped fibers in the Z-direction. The nonwoven preform is then densified with pitch via vacuum pressure impregnation (VPI). The density of the composite is 1.0 g/cc. A second densification cycle is then applied with pitch-based carbon using vacuum pressure impregnation. The density of the composite is 1.6 g/cc. The preform is stabilized in air at 170°C for 25 days. The composite is then carbonized at 600-1000°C to remove the volatiles. The density of the composite is 1.4 g/cc). Following carbonization the composite is infiltrated with silica using vacuum infiltration of silica suspended in an aqueous slurry. Following the infiltration by the ceramic additive, the composite undergoes a third and final densification cycle of carbon with pitch by VPI. This is then followed by heat treatment to >1800°C to convert the ceramic additive to SiC. The composite is then machined to the configuration of an aircraft brake disc. Finally, an oxidation protection system is applied to the composite brake disc.

### Example 4

A nonwoven preform is made from carbon fiber using pitch precursors. The preform consists of continuous fibers arranged in the X and Y plane as well as short chopped fibers in the Z-direction. The nonwoven preform is then densified with carbon using CVD. The density of the composite is 1.0 g/cc. A second densification cycle is then applied with the resin using VPI. The density of the composite is 1.6 g/cc. The preform is stabilized in air at 170°C for 28 days. The composite is then carbonized at 600-1000°C to remove the volatiles. The density of the composite is 1.6 g/cc). Following carbonization the composite is infiltrated with silica using vacuum infiltration of silica suspended in an aqueous slurry. Following the infiltration by the ceramic additive, the composite undergoes a third and final densification cycle of carbon with pitch by VPI. This is then followed by heat treatment to >1800°C to convert the ceramic additive to SiC. The composite is then machined to the configuration of an aircraft brake disc. Finally, an oxidation protection system is applied to the composite brake disc.

### Example 5

A nonwoven preform is made from carbon fiber using PAN precursors. The preform consists of continuous fibers arranged in the X and Y plane as well as short chopped fibers in the Z-direction. The nonwoven preform is then densified with carbon using CVD. The density of the composite is 1.4 g/cc. A second densification cycle is then applied with pitch using VPI. The density of the composite is 1.6 g/cc. The preform is stabilized in air at 170°C for 22 days. The composite is then carbonized at 600-1000°C to remove the volatiles. The density of the composite is 1.6 g/cc). Following carbonization the composite is infiltrated with silica using vacuum infiltration of silica suspended in an aqueous slurry. Following the infiltration by the ceramic additive, the composite undergoes a third and final densification cycle of carbon with pitch by VPI. This is then followed by heat treatment to >1800°C to convert the ceramic additive to SiC. The composite is then machined to the configuration of an aircraft brake disc. Finally, an oxidation protection system is applied to the composite brake disc.

### Example 6

A nonwoven preform is made from carbon fiber using pitch precursors. The preform consists of continuous fibers arranged in the X and Y plane as well as short chopped fibers in the Z-direction. The nonwoven preform is then densified with carbon using CVD. The density of the composite is 0.8 g/cc. A second densification cycle is then applied using an RTM process. The density of the composite is 1.6 g/cc. The preform is stabilized in air at 170°C for 20 days. The composite is then carbonized at 600-1000°C to remove the volatiles. The density of the composite is 1.5 g/cc). Following carbonization the composite is infiltrated with silica using vacuum infiltration of silica suspended in an aqueous slurry. Following the infiltration by the ceramic additive, the composite undergoes a third and final densification cycle of carbon with pitch by VPI. This is then followed by heat treatment to >1800°C to convert the ceramic additive to SiC. The composite is then machined to the configuration of an aircraft brake disc. Finally, an oxidation protection system is applied to the composite brake disc.

### Example 7

A nonwoven preform is made from carbon fiber using PAN precursors. The preform consists of continuous fibers arranged in the X and Y plane as well as short chopped fibers in the Z-direction. The nonwoven preform is then densified with carbon using CVD. The density of the composite is 1.3 g/cc. A second densification cycle is then applied with pitch using an RTM process. The density of the composite is 1.4 g/cc. The preform is stabilized in air at 170°C for 21 days. The composite is then carbonized at 750°C to remove the volatiles. The density of the composite is 1.5 g/cc. Following carbonization the composite is infiltrated with silica using vacuum infiltration of silica suspended in an aqueous slurry. Following the infiltration by the ceramic additive, the composite undergoes a third and final densification cycle by vacuum impregnation of pitch-based carbon matrix material. This is then followed by heat treatment to >1800°C to convert the ceramic additive to SiC. The composite is then machined to the configuration of an aircraft brake disc. Finally, an oxidation protection system is applied to the composite brake disc.

The present invention has been described herein in terms of preferred embodiments. However, obvious modifications and additions to the invention will become apparent to those skilled in the relevant arts upon a reading and understanding of the foregoing description. It is intended that all such modifications and additions form a part of the present invention to the extent that they fall within the scope of the several claims appended hereto.

## Claims

1. A method for manufacturing a carbon-carbon composite preform, said method comprising sequentially:
providing a nonwoven preform;
carbonizing the nonwoven preform;
subjecting the nonwoven preform to a first chemical vapor deposition/infiltration (CVD) and/or liquid resin/pitch densification procedure;
carbonizing the nonwoven preform;
infiltrating the nonwoven preform with a ceramic additive in suspension to a density of at least 1.5 gm/cc;
drying the nonwoven preform; and
subjecting the nonwoven preform to a second CVD or liquid resin/pitch densification procedure and to a heat treatment, before or after said second densification procedure, to set the ceramic additive.

2. The method for manufacturing a carbon-carbon composite material article of claim 1, wherein densification of the material comprises subjecting the material to a resin transfer molding (RTM) process using a high viscosity pitch resin.

3. The method for manufacturing a carbon-carbon composite material article of claim 2, wherein densification of the material further comprises a step of stabilizing the pitch.

4. The method for manufacturing a carbon-carbon composite material article of claim 3, further comprising carbonizing or charring the pitch after the step of stabilizing.

5. The method for manufacturing a carbon-carbon composite material article of claim 1, wherein the step of adding a ceramic additive comprises infiltrating the nonwoven preform with a ceramic additive solution comprising silica suspended in water.

6. A method for manufacturing a carbon-carbon composite material article comprising the sequential steps of:
providing a nonwoven preform;
carbonizing the preform;
subjecting the preform to a first chemical vapor deposition procedure;
subjecting the preform to a resin transfer molding process with a high viscosity resin/pitch;
stabilizing the resin/pitch;
carbonizing or charring the resin/pitch;
infiltrating the preform with a solution of silica suspended in water;
drying the preform;
subjecting the preform to a second chemical vapor deposition procedure; and
heat treating the preform.

7. A carbon-carbon composite material article manufactured by the process of claim 1 or by the process of claim 12.

8. The carbon-carbon composite material article of claim 14, wherein all silicon carbide particles in the article have an average diameter of less than 1 micron and the weight percentage of silicon carbide in the article is less than 2%.

9. A carbon-carbon composite material article comprising a carbonized nonwoven preform, wherein the preform is subjected to rapid densification using a resin transfer molding process with a high viscosity pitch resin and is subsequently infiltrated with silica suspended in water.

10. The carbon-carbon composite material article of claim 9, wherein the preform is subjected to a first chemical vapor deposition procedure prior to the step of densification and to a second chemical vapor deposition procedure subsequent to infiltration with silica suspended in water.
